# EUROPEAN PATENT APPLICATION

(11) **EP 2 381 324 A1**
(43) Date of publication of application: **26.10.2011**
(21) Application number: 11163307.9
(22) Date of filing: 20.04.2011
(51) Int. Cl.: G05B 19/409, G10L 15/22, B27M 1/08, B27C 9/04, B27C 3/04

(54) **Method for controlling the operation of a machine for working components make of wood or the like**

(30) Priority: 20.04.2010 IT BO20100244
(71) Applicant: BIESSE S.p.A., Pesaro (IT)
(72) Inventor: Bernardi, Paolo, 47841, CATTOLICA (IT)
(74) Representative: Jorio, Paolo

(57) **Abstract**

The operation of a machine, which is equipped with a clamping device (46, 47) for holding a component (2) made of wood and/or a tool (14, 26) for working the component (2) itself, is controlled by acquiring a vocal command provided by an operator relating to an operation to be performed by means of or on the clamping device (46, 47) and/or tool (14, 26), and performing the operation itself according to such a vocal command.

## Description

The present invention relates to a method for controlling the operation of a machine for working components made of wood or the like.

The application of the present invention is particularly advantageous in a machine for boring wooden panels, to which explicit reference will be made in the following description without therefore loosing in generality.

Providing a machine is known in the field of boring wooden panels or the like, of the type comprising a base defining a resting plane for at least one panel having substantially rectangular shape; a machine control unit configured to store a given boring diagram; and at least one boring head, which is mounted above or below the resting plane, extends in a given horizontal first direction, and is provided with a plurality of tool mandrels aligned with each other in the first direction and each adapted to receive and retain a respective boring tip.

When in use, the boring head is firstly positioned in the first direction and in a second direction which is horizontal and transversal to the first direction itself according to the mentioned boring diagram, and is hence moved perpendicularly to the resting plane to perform the boring on a test panel and make a plurality of bores.

Once the test panel is transferred from the resting panel to a control station, the actual position of each bore in each of the two directions is manually or automatically detected with respect to the side surfaces of the test panel, and is hence compared with a nominal position of the bore in each of the two directions so as to provide to the operator a correction value each time that the actual and nominal positions of the bore itself in one of the two directions are different from each other. Lastly, the operator provides the machine control unit with the correction values to properly equip the boring head in the first and in the second direction.

Since the operator should firstly take note of the correction values obtained from the detections performed on the test panel and should hence move away from the control station to key the correction values into the machine control unit, the known machines for boring panels of the above-mentioned type have certain drawbacks mainly resulting from the fact that the above-mentioned operations involve a relatively long execution time.

It is an object of the present invention to provide a method for controlling the operation of a machine for working components made of wood or the like, which does not have the above-indicated drawbacks and is simple and affordable to implement.

According to the present invention, there is provided a method for controlling the operation of a machine for working components made of wood or the like as claimed in the appended claims.

The present invention will now be described with reference to the accompanying drawings, which illustrate a non-limiting embodiment thereof, in which:
figure 1 is a diagrammatic side view with parts removed for clarity, of a preferred embodiment of the machine of the present invention;
figure 2 is a diagrammatic top view with parts removed for clarity, of a detail of the machine in figure 1; and
figure 3 is a diagrammatic perspective view of a variant of the machine in figure 1.

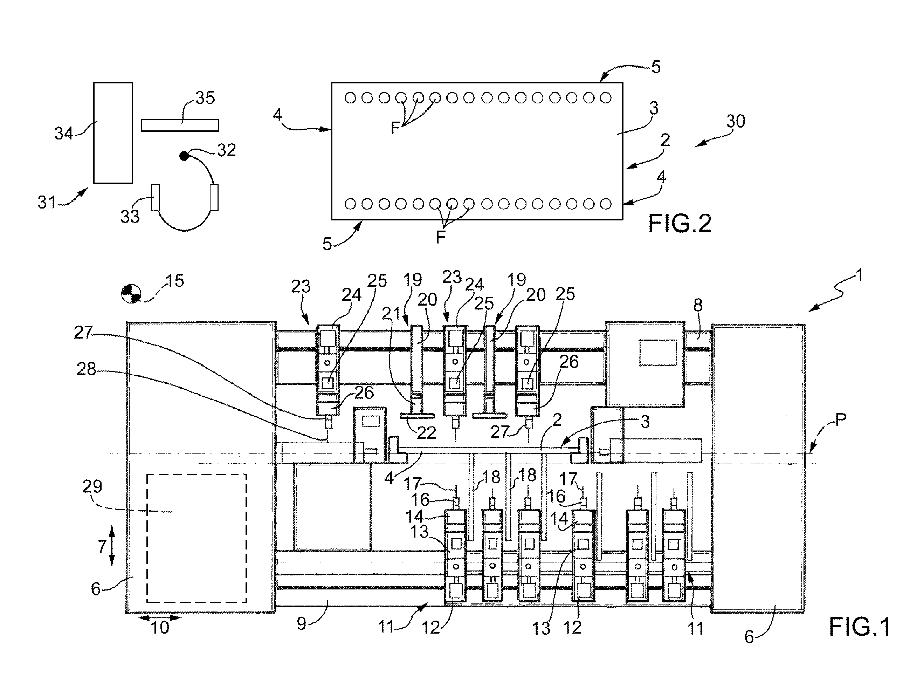

With reference to figure 1, 1 denotes, as a whole, a machine for working components made of wood or the like, in this case a machine for boring panels 2, each of which has a flat substantially rectangular shape, and is limited by two larger, parallel surfaces 3, two smaller, parallel surfaces 4 which are perpendicular to the surfaces 3, and two smaller, parallel surfaces 5 which are perpendicular to the surfaces 3 and 4.

Machine 1 comprises two vertical, parallel uprights 6, which extend in a given direction 7, and are connected to each other at their ends by a top crossbar 8 and by a bottom crossbar 9, which are horizontal and parallel to each other and to a direction 10 which is transversal to direction 7.

The bottom crossbar 9 supports a plurality of operating units 11, each of which comprises a horizontal slide 12 coupled, in a known way, with crossbar 9 to perform straight movements along crossbar 9 in direction 10, a vertical slide 13 coupled, in a known way, with slide 12 to perform straight movements with respect to slide 12 in direction 7, and a boring head 14 coupled, in a known way, with slide 13 to perform straight movements with respect to slide 13 in a direction 15 which is horizontal and orthogonal to the directions 7 and 10.

Head 14 supports a plurality of tool mandrels 16, which are aligned with each other in direction 15, and are each adapted to receive and retain a respective boring tip 17, which extends parallel to direction 7, is oriented upwards, and is moved by slide 13 in direction 7 between a lowered resting position and a raised boring position.

Moreover, each unit 11 supports a resting bar 18, which is coupled, in a known way, with slide 12 to perform straight movements with respect to slide 12 in direction 7 between a lowered resting position and a raised operating position, in which bar 18, in conjunction with the bars 18 of the other units 11, defines a substantially horizontal resting plane P for at least one panel 2.

The top crossbar 8 supports a plurality of clamping devices 19, each of which comprises a horizontal slide 20 coupled, in a known way, with crossbar 8 to perform straight movements along crossbar 8 in direction 10, a vertical slide 21 coupled, in a known way, with slide 20 to perform straight movements with respect to slide 20 in direction 7, and at least one clamping member 22, which is moved by slide 21 in direction 7 between a raised resting position and a lowered tightening position of panel 2 against the bars 18.

Crossbar 8 also supports a plurality of boring units 23, each of which comprises a horizontal slide 24 coupled, in a known way, with crossbar 8 to perform straight movements along crossbar 8 in direction 10, a vertical slide 25 coupled, in a known way, with slide 24 to perform straight movements with respect to slide 24 in direction 7, and a boring head 26 coupled, in a known way, with slide 25 to perform straight movements with respect to slide 25 in direction 15.

Head 26 supports a plurality of tool mandrels 27, which are aligned with each other in direction 15, and are each adapted to receive and retain a respective boring tip 28, which extends parallel to direction 7, is oriented downwards, and is moved by slide 25 in direction 7 between a raised resting position and a lowered boring position.

Moreover, machine 1 is equipped with a control unit 29 accommodated within one of the uprights 6 to control the operation of machine 1 itself, and with a control station 30 (figure 2) of the boring operations performed by the heads 14 and 26.

According to that shown in figure 2, station 30 is equipped with a vocal recognition system 31 comprising a microphone 32, an earphone 33, and a processing unit 34, for example a personal computer, which is equipped with a monitor 35 so the operator can display and check the data, is configured by means of a vocal recognition program, and is connected with unit 29.

When in use, the boring heads 14, 26 are firstly positioned in the directions 10, 15 according to a boring diagram stored in unit 29, and are hence moved in direction 7 so as to perform the boring on a test panel 2 and make a plurality of bores F.

Once the test panel 2 is transferred to the control station 30, the actual position of each bore F in each direction 10,15 is manually or automatically detected by the operator with respect to the surfaces 4, 5 by means of a measuring device of known type, and is hence compared with a nominal position of the bore F in the corresponding direction 10, 15 so as to provide to the operator a correction value each time that the actual and nominal positions of a bore F in one of the directions 10, 15, are different from each other.

The correction values are firstly verbally communicated by the operator to the processing unit 34 by means of microphone 32, they are hence checked by the operator on monitor 35, and lastly they are transmitted by unit 34 to unit 29, which selectively corrects the position of the heads 14, 26 in the directions 10, 15 so as to properly equip machine 1.

As a result of that indicated above, the correction step of the position of the heads 14, 26 in the directions 10, 15 is performed in relatively short times and does not require the operator to enter the correction values in unit 29 by means of a long and complex typing operation on the keyboard.

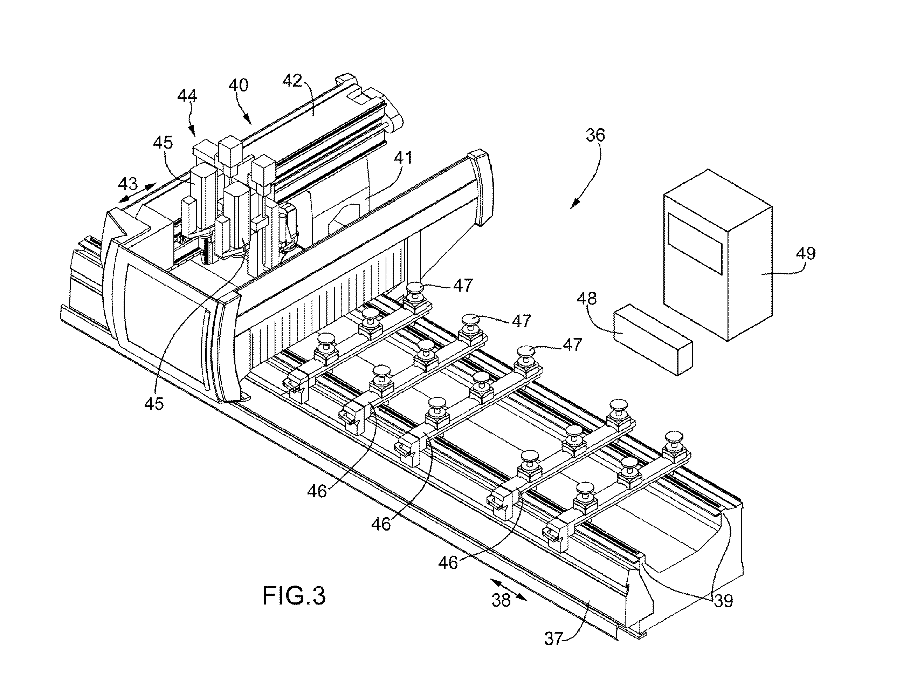

The variant illustrated in figure 3 relates to a machine 36 comprising an elongated base 37, which extends in a horizontal direction 38, is substantially U-shaped, has two side guide members 39 parallel to direction 38 itself, and supports a crane 40.

Crane 40 comprises a vertical upright 41 movable along base 37 in direction 38, and a crossbar 42, which protrudes from one free top end of upright 41 in a direction 43 which is horizontal and transversal to direction 38, extends above base 37, and supports a working head 44 of known type, which is movable along crossbar 42 in direction 43, and in this case is equipped with two electric mandrels 45 each adapted to receive and retain a respective tool or working aggregate (not illustrated).

Moreover, machine 36 is equipped with a plurality of crossbars 46, which will be noted later with the term "working planes", extend between the members 39 in direction 43, they are movable along members 39 in direction 38, and support a plurality of clamping vices 47, whose arrangement on the related working planes 46 substantially depends on the sizes of the components (not illustrated) to be worked and on the working to be performed on the components themselves (not illustrated).

Each clamping vice 47 is movable between a tightening position and a release position of at least one component (not illustrated), and is also movable along the related working plane 46 in direction 43.

Machine 36 is provided with a vocal recognition system 48, which is entirely similar to system 31, and is configured to:
acquire a plurality of vocal commands provided by the operator relating to the position of the working planes 46 in direction 38 and of the clamping jaws 47 in direction 43;
transmit the data provided verbally by the operator to a control unit 49 of machine 36; and
allow unit 49 to position the working planes 46 in direction 38 and the clamping vices 47 in direction 43, according to the vocal commands provided by the operator.

According to certain variants not shown, the two systems 31, 48 may be used, for example, to:
acquire a vocal command provided by the operator relating to working to be performed on the panels 2 or on the components (not illustrated), transmit the data relating to the vocal command provided by the operator to the units 29, 49, and allow the boring heads 14, 26 or the operating head 44 to pick the tool or working aggregate suitable for performing the work indicated by the operator, from a related known tool storage area (not illustrated); and/or
acquire a vocal command provided by the operator relating to working to be performed on the panels 2 or on the components (not illustrated), transmit the data relating to the vocal command provided by the operator to the units 29, 49, and allow the activation of the boring tips 17, 28 or the electric mandrel 45 intended to perform the work indicated by the operator; and/or
acquire a vocal command provided by the operator relating to a boring and/or cutting diagram stored in the units 29, 49 and allow the units 29, 49 to equip the machines 1, 36 according to the boring and/or cutting diagram indicated by the operator.

## Claims

1. A method for controlling the operation of a machine for working components (2) made of wood or the like, the machine comprising at least a clamping device (46, 47) for holding at least one component (2) to be worked and/or a tool (14, 26) for working the component (2) itself, the method being **characterized in that** it comprises the steps of:
acquiring at least one vocal command provided by an operator relating to an operation to be performed by means of or on said clamping device (46, 47) or tool (14, 26); and
performing said operation according to the vocal command provided by the operator.

2. A method according to claim 1, wherein the clamping device (46, 47) is movable in at least one given direction (38, 43) ; the said step of acquiring at least one vocal command provided by an operator comprising the step of acquiring a vocal command relating to the position of the clamping device (46, 47) in said direction (38, 43), and said step of performing said operation according to the vocal command provided by the operator comprising the step of positioning the clamping device (46, 47) in said direction (38, 43).

3. A method according to claim 1 or 2, wherein the tool (14, 26) is movable in at least one given direction (10, 15); said step of acquiring at least one vocal command provided by an operator comprising the step of acquiring a vocal command relating to the position of the tool (14, 26) in said direction (10, 15), and said step of performing said operation according to the vocal command provided by the operator comprising the step of positioning the tool (14, 26) in said direction (10, 15).

4. A method according to any one of the preceding claims, wherein the machine comprises a plurality of tools for working the components (2); said step of acquiring at least one vocal command provided by an operator comprising the step of acquiring a vocal command relating to the work to be performed on the components (2), and said step of performing said operation according to the vocal command provided by the operator comprising the step of selecting the tool suitable for performing said work.

5. A method according to any one of the preceding claims, wherein the tool (14, 26) is a boring tool (14, 26) which is movable in at least one given direction (10, 15); the method comprising the steps of:
positioning the boring tool (14, 26) in said direction (10, 15) according to a specific boring diagram;
performing the boring on a component (2) so as to make at least one hole (F);
detecting the actual position of the hole (F) at least in said direction (10, 15); and
comparing the actual position of the hole (F) with a nominal position of the hole (F) itself;
said step of acquiring at least one vocal command provided by an operator comprising the step of acquiring a vocal command relating to the position of the boring tool (14, 26) in said direction (10, 15) when the actual position and the nominal position of the hole (F) are different from each other, and the said step of performing said operation according to the vocal command provided by the operator comprising the step of correcting the position of the boring tool (14, 26) in said direction (10, 15).

6. A method according to any one of the preceding claims, wherein the tool (14, 26) is a boring tool (14, 26) which is movable in two directions (10, 15) which are substantially perpendicular to each other; the method comprising the steps of:
positioning the boring tool (14, 26) in each direction (10, 15) according to a specific boring diagram;
performing the boring on a component (2) so as to make at least one hole (F);
detecting the actual position of the hole (F) in each of said directions (10, 15); and
comparing the actual position of the hole (F) with a nominal position of the hole (F) itself;
said step of acquiring at least one vocal command provided by an operator comprising the step of acquiring a first vocal command relating to the position of the boring tool (14, 26) in a first said direction (10) when the actual position and the nominal position of the hole (F) in the first direction (10) are different from each other, and a second vocal command relating to the position of the boring tool (14, 26) in a second said direction (15) when the actual position and the nominal position of the hole (F) in the second direction (15) are different from each other, and said step of performing said operation according to the vocal command provided by the operator comprising the step of correcting the position of the boring tool (14, 26) in said first and/or second direction (10, 15).

7. A method according to any one of the claims from 1-4, wherein the machine comprises two longitudinal guide members (39) which are parallel to a given first direction (38), a plurality of crossbars (46), which are parallel to a second direction (43) transversal to the first direction (38), and are movable along the members (39) in the first direction (38), and a plurality of clamping devices (47), which are adapted to retain at least one component (2), and are movable along related crossbars (46) in the second direction (43); said step of acquiring at least one vocal command provided by the operator comprising the step of acquiring a vocal command relating to the position of at least one crossbar (46) in the first direction (38) and/or to the position of at least one clamping device (47) in the second direction (43), and said step of performing said operation according to the vocal command provided by the operator comprising the step of moving the crossbar (46) in the first direction (38) and/or the clamping device (47) in the second direction (43).
